# EUROPEAN PATENT APPLICATION

(11) **EP 1 978 683 A1**
(43) Date of publication of application: **08.10.2008**
(21) Application number: 07007125.3
(22) Date of filing: 04.04.2007
(51) Int. Cl.: H04L 12/56, H04L 12/46

(54) **Method and device for data transport and system comprising such device**

(71) Applicant: Nokia Siemens Networks Oy, 02610 Espoo (FI)
(72) Inventor: Gruber, Claus, 80336 München (DE)
(74) Representative: Bruglachner, Thomas E.

(57) **Abstract**

A method and a device are provided for data transport,
wherein a bit pattern is stored in a predefined field, said bit pattern being used to identify a criterion to transport the data from a first network component to a second network component. Also a system comprising said device is provided.

## Description

The invention relates to a method and a device for data transport and to a system comprising such a device.

Next to IP services VPN business services are generating more and more traffic and revenue for network providers. In particular, Ethernet services (E-Line and E-LAN) are evolving. Currently, these layer 2 services are mostly transported via layer 3 IP/MPLS tunnels emulating layer 2 technologies thereby requiring complex data transformations and changes in the functional layer structure (change from layer 2 to layer 3 or emulation of layer 2 with layer 3 technologies).

The complex functionalities and protocols of layer 3 are not always required to transport pure layer 2 services. An immediate layer 2 transport within a network (possibly also end-to-end) can improve traffic throughput. Ethernet business services can be transported on a pure layer 2 infrastructure without the need of complex data transformations and changes in the functional layer structure. Routers can be offloaded by Ethernet switches and cheaper equipment can be installed instead of expensive IP routers.

Currently, three technologies are discussed (and currently standardized in IEEE, IETF, ITU-T, MEF) to establish layer 2 tunnels in a network:
a) VLAN Cross-Connect (VLAN-XC),
b) Provider Backbone Transport (PBT), and
c) Transport Multi Protocol Label Switching (T-MPLS).

All technologies provide an encoding of tunnels in a packet.

PBT establishes pre-defined tunnels between edge-switches of a network. Ingress edge switches have to analyze incoming packets, choose one of the pre-defined tunnels, and label an Ethernet packet accordingly. For this, a Media Access Control (MAC) address encapsulation is performed at the edge switches.

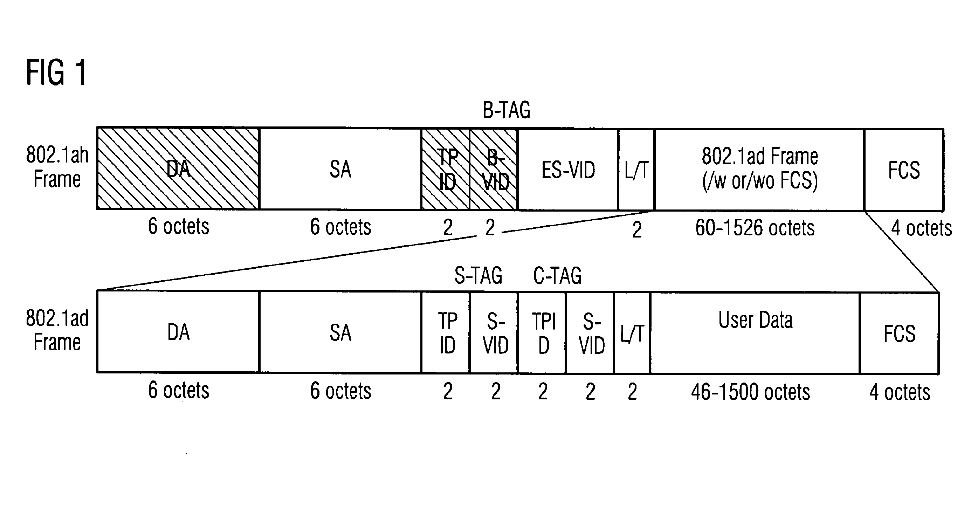

**Fig.1** shows a frame structure of IEEE 802.lah used for PBT. The tunnel is encoded by the destination MAC address of the backbone egress switch (B-DA) as well as a 12bit VLAN-tag (Backbone tag, B-VID). PBT forms a topology of B-DA rooted trees and an independent sink-tree is configured for each <B-DA, B-VID> pair. Since no spanning tree algorithm has to be performed the trees need not to be spanning. Thus, up to 4096 different trees can be configured for one B-DA.

In conventional PBT, tunnels that end at an edge device need to have the same B-MAC address. Thus, different tunnels ending at the switch can only be distinguished by the B-VID identifier. According to the 12 bits available for addressing purposes, only 2¹²=4096 tunnels for each destination can be distinguished.

The **object** to be solved is to overcome the disadvantage as stated before and to provide an extended scalability.

This problem is solved according to the features of the independent claims. Further embodiments result from the depending claims.

In order to overcome this problem a method is provided for data transport, wherein a bit pattern is stored in a predefined field, said bit pattern being used to identify a criterion to transport the data from a first network component to a second network component.

This approach allows to extend scalability by providing a larger number of bits to encode a tunnel. If the Provider Backbone Transport (PBT) protocol is applied, the scalability can be extended to, e.g., 48+12 bits for encoding the tunnel, thereby allowing to distinguish between 2⁶⁰ criteria.

As an embodiment, the criterion may comprise at least one of the following:
- a tunnel;
- a communication path;
- a tree;
- a multicast tree;
- a customer;
- a Quality-of-Service characteristic.

In an embodiment, the data is transported from the first network component to the second network component via at least one additional network component. Hence, the data can be transmitted or tunnelled through several network components.

In a further embodiment, the bit pattern is stored in an address-field and/or a VLAN-tag field.

Preferably, the data is transported via at least one mechanism based on or according to a Provider Backbone Transport (PBT) protocol. In particular, the PBT protocol may be extended accordingly.

However, in contrast to PBT the B-MAC addresses are substituted by the bit pattern for tunnel encoding. Thus, tunnels that ends at the same edge device need not to have the same B-MAC bit pattern.

In yet another embodiment, the method comprises the step of label swapping that may further comprise the following steps:
- the first network component requests from the second network component a label to identify a tunnel between the first network component and the second network component;
- the second network component confirms an availability of said label in case said label is not yet used;
- the second network component declines the availability of said label in case said label is already used.

Instead or in addition to the tunnel, other criteria as mentioned above may apply.

Preferably, the first network component can suggest said label to be used and the second network component may respond whether or not this label is admissible according to the steps of the method described before.

It is further possible that after a label has been declined by the second network component, a different label is suggested by the first network component or - alternatively - together with declining a label the second network component may suggest a different label to be used.

As an alternative, the second network component may suggest a label to the first network component. In such case, the first network component may have to decide whether this label is unique to identify the communication path between the first network component and the second network component and send an appropriate reply to the second network component.

It is an advantage of label switching that unique labels are negotiated locally between two connected network components thereby avoiding a global table of unique labels to be maintained by each network component throughout the network.

With this option to swap the labels along the path the label has local port meaning only and 2⁶⁰ bits can be used at each port which extends the scalability even further.

In yet another embodiment, each network component can be one of the following types:
- a network node;
- a gateway;
- a switch;
- a terminal;
- a user equipment;
- a mobile phone;
- a relay node;
- a router;
- an edge router.

The problem as stated supra is also solved by a device to be used for data transport, said device comprising a processor unit that is arranged and/or equipped such that the method as described herein is executable on said processor.

As an embodiment, the device can be of the following type:
- a network node;
- a gateway;
- a switch;
- a terminal;
- a user equipment;
- a mobile phone;
- a relay node;
- a router;
- an edge router.

The problem is also solved by a communication system comprising the device as described herein.

Embodiments of the invention are shown and illustrated in the following figures:
- Fig.2: shows a communication network comprising network components for MAC encapsulation with an enhanced Provider Backbone Transport (PBT) protocol;
- Fig.3: shows a flow chart comprising steps of a method for data transport.

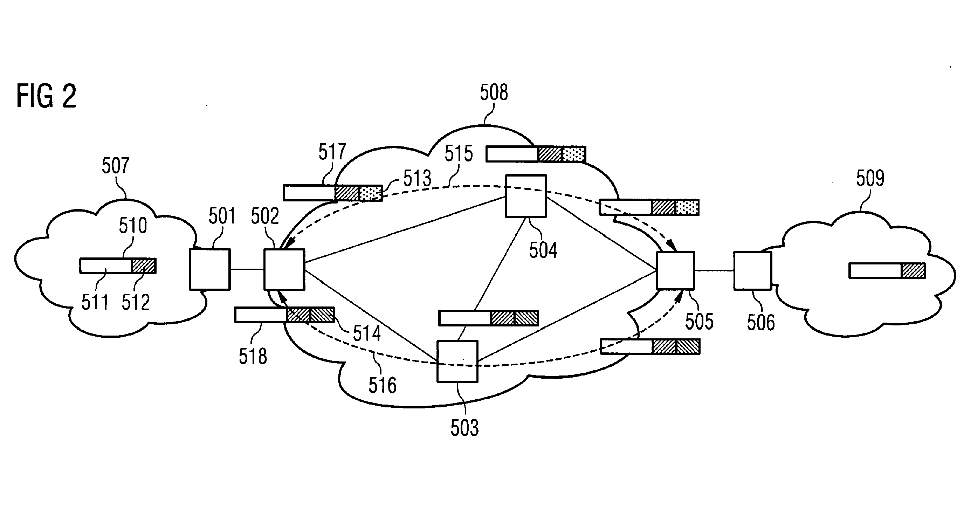

Fig.2 shows a communication network comprising network components for MAC encapsulation with an enhanced Provider Backbone Transport (PBT) protocol.

In Fig.2 a network 507 contains a network component 501 that is connected to a network component 502 of a network 508.

The network 508 also comprises network components 503 to 505, wherein the network component 502 is connected to network components 503 and 504, the network component 503 is connected to network components 504 and 505 and the network component 504 is further connected to the network component 505.

The network component 505 is connected to a network component 506 of a network 509.

There exist two logical paths through the network 508, i.e. from the network component 502 to the network component 505, namely a path 515 via the network component 504 and a path 516 via the network component 503.

The network components of Fig.2 may be of various type. They can be in particular gateways, switches, (edge) routers, terminals or relay nodes.

As an example, a message 510 is sent from the network component 501 of the network 507 to the network component 506 of the network 508. This message 501 comprises a MAC destination address-field 512 (in this example containing the MAC address of the network component 506) and a remaining portion 511 of the message. The message can be a message according to the PBT protocol.

The message 510 is conveyed from the network component 501 to the network component 502, where two different paths 515 and 516 can be chosen to transmit this message 510 to the end of the network 508, i.e. to the network component 505.

For the path 515 the message 510 is encapsulated by another field 513 containing a bit pattern that indicates that the path 515 has to be chosen. Such encapsulated message 517 is transferred via the network component 504 to the network component 505.

In a similar manner, the message 510 can be sent to the network component 505 by appending a bit pattern in a field 514 thereby indicating that the path 516 will be used.

The network component 504 receiving such message 517 knows that the bit pattern 513 identifies the path 515 and forwards the message to the network component 505. Also, the network component 503 forwards the message 518 to the network component 505.

At the end of the network 508, the network component 505 unwraps the message 517 received via the path 515 or the message 518 received via the path 516 and forwards the message 510 without the additional fields 513 or 514 to the network component 506.

Using the PBT protocol, this approach extends the possibility to distinguish destinations by providing 48+12 bits to encode the tunnel. With an additional option to swap the labels along the path the label has local port meaning only and 2⁶⁰ bits can be used at each port which extends the scalability even further.

Such label switching can be performed by two connected network components of a path 515 or 516. Those network component negotiate a label to be used for their connection.

For example, the network components 502 and 503 may negotiate a label for their portion of the path 516, such label can be used as bit pattern to identify this section. Advantageously, such label has only limited visibility to the affected network components (here 502 and 503) and no global table comprising all labels of the network 508 needs to be maintained.

It is also possible that the bit pattern comprises information that helps to distinguish multicast trees and/or customers and/or tunnels with different Quality-of-service (QoS) characteristics.

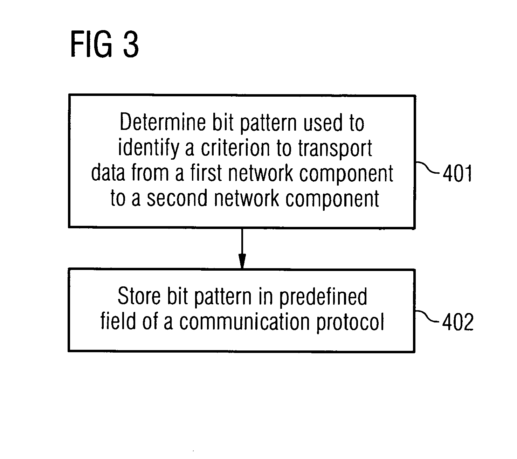

Fig.3 shows a flow chart comprising steps of a method for transporting data.

In a first step 401, a bit pattern is used to identify a criterion to transport the data from a first network component to a second network component. The criterion is preferably a tunnel through a network.

In a second step 402, a bit pattern is stored in a predefined field of a communication protocol, e.g., a PBT protocol.

## Claims

1. A method for data transport, wherein a bit pattern is stored in a predefined field, said bit pattern being used to identify a criterion to transport the data from a first network component to a second network component.

2. The method according to claim 1, wherein the criterion comprises at least one of the following:
- a tunnel;
- a communication path;
- a tree;
- a multicast tree;
- a customer;
- a Quality-of-Service characteristic.

3. The method according to any of the previous claims, wherein the data is transported from the first network component to the second network component via at least one additional network component.

4. The method according to any of the previous claims, wherein the bit pattern is stored in an address-field and/or a VLAN-tag field.

5. The method according to any of the previous claims, wherein the bit pattern is stored in an address-field for a destination MAC-address.

6. The method according to any of the previous claims, wherein the data is transported via at least one mechanism according to a Provider Backbone Transport (PBT) protocol.

7. The method according to any of the previous claims, further comprising the step of label swapping.

8. The method according to claim 7, wherein the step of label swapping comprises the following steps:
- the first network component requests from the second network component a label to identify a tunnel between the first network component and the second network component;
- the second network component confirms an availability of said label in case said label is not yet used;
- the second network component declines the availability of said label in case said label is already used.

9. The method according to any of the previous claims, wherein each network component can be one of the following types:
- a network node;
- a gateway;
- a switch;
- a terminal;
- a user equipment;
- a mobile phone;
- a relay node;
- a router;
- an edge router.

10. A device for data transport comprising a processor unit that is arranged such that the method according of any of the preceding claims is executable on said processor.

11. The device according to claim 10, wherein said device is a communication device, in particular one of the following type:
- a network node;
- a gateway;
- a switch;
- a terminal;
- a user equipment;
- a mobile phone;
- a relay node;
- a router;
- an edge router.

12. Communication system comprising the device according to any of claims 10 to 11.
